# EUROPÄISCHE PATENTSCHRIFT

(11) **EP 0 890 715 B1**
(45) Veröffentlichungstag und Bekanntmachung des Hinweises auf die Patenterteilung: **23.02.2005**
(21) Anmeldenummer: 98112222.9
(22) Anmeldetag: 02.07.1998
(51) Int. Cl.: F01N 3/08, F01N 3/02

(54) **Kraftfahrzeug mit einer Verbrennungskraftmaschine mit V-Anordnung der Zylinder und Katalysatoren**
Motor vehicle with an internal combustion engine of V-type and catalytic converters
Véhicule automobile avec un moteur à combustion interne à cylindres disposés en V et pots catalytiques

(30) Priorität: 09.07.1997 DE 19729283
(43) Veröffentlichungstag der Anmeldung: 13.01.1999
(73) Patentinhaber: Ford Global Technologies, Inc., A subsidiary of Ford Motor Company, Dearborn, Michigan 48126 (US)
(72) Erfinder: Mayer, Thomas E., 50129 BM-Glessen (DE); Phlips, Patrick, 50858 Köln (DE); Grieser, Klemens, 40764 Langenfeld (DE); Krzykowski, Heinrich Z., 58313 Herdecke (DE)
(74) Vertreter: Drömer, Hans-Carsten, Dipl.-Ing.

(56) Entgegenhaltungen:
- EP-A- 0 849 442
- DE-A- 3 439 998
- DE-A- 4 218 834
- US-A- 5 384 098

## Beschreibung

Die Erfindung betrifft ein Kraftfahrzeug mit einer im Frontbereich angeordneten Verbrennungskraftmaschine, deren Zylinder in V-Anordnung angeordnet sind und die Mittelachse in Fahrtrichtung weist, bei der die Abgase jeder Zylinderreihe über je zwei Abgasleitungen weitergeleitet werden und die Abgasleitungen durch Steuerventilanordnungen absperrbar sind, wobei die Abgase jeder Zylinderseite einem Katalysator zugeleitet werden und zwischen den Abgasleitungen jeweils eine Bypass-Leitung mit deutlich geringerem Querschnitt vorgesehen ist, wobei die Bypass-Leitungen einen Bereich der Abgasleitungen einer Zylinderreihe stromaufwärts der Steuerventilanordnungen mit einem Bereich der Abgasleitung für die andere Zylinderreihe verbinden.

Anordnungen dieser Art sind so gestaltet, daß die Abgase jeder Zylinderreihe über gesonderte Abgasleitungen auf der gleichen Seite des Kraftfahrzeuges angeordneten Katalysatoren zugeleitet werden. Diese Anordnung weist jedoch den Nachteil auf, daß der Katalysator entweder nur nahe am Motor angeordnet werden kann oder nur fern davon, wobei die Anordnung eines kurzen, zusätzlichen Aufheizpfades nicht möglich ist. Er hätte zwangsläufig die gleiche Länge wie der Hauptstrang.

In der älteren Patentanmeldung EP 849 442 A1, die unter Artikel 54(3) EPÜ fällt, ist bereits vorgeschlagen worden, die Abgase einer Zylinderseite über einen Abgaskrümmer und eine Abgasleitung jeweils auf die andere Seite der Verbrennungskraftmaschine zu leiten und einem auch auf dieser Seite befindlichen Katalysator zuzuleiten, wobei in den Abgasleitungen jeweils eine Steuerventilanordnung vorgesehen ist, mit der Abgasleitungen absperrbar sind, wobei zwischen der Abgasleitung einer Zylinderreihe und der Abgasleitung der anderen Zylinderreihe jeweils eine Bypass-Leitung mit deutlich geringerem Querschnitt als die Abgasleitungen vorgesehen ist und die Bypass-Leitungen einen Bereich der Abgasleitungen nahe den Abgaskrümmem einer Zylinderreihe mit einem Bereich nahe der Einmündung der Abgasleitung in dem auf der anderen Seite des Kraftahrzeuges befindlichen Katalysator für die andere Zylinderreihe zu verbinden.

Bei dieser Anordnung kann sich jedoch der Nachteil einstellen, daß durch die exotherme Reaktion des verwendeten Drei-Wege-Katalysators die auch in diesem Bereich befindliche NOx-Falle unerwünscht aufgeheizt wird, wobei anzumerken ist, daß die NOx-Fallen keine sehr hohen Temperaturen vertragen.

Gemäß der Erfindung werden diese Nachteile dadurch beseitigt, daß bei einer Anordnung nach dem Oberbegriff des gültigen Anspruchs die Anordnung so getroffen wird, daß die Abgaskrümmer jeder Zylinderreihe unmittelbar in jeweils einen Drei-Wege-Katalysator einmünden und am Ende der Abgasleitungen vor den Auspuffleitungen eine NOx-Falle angeordnet ist. Dabei können die Auspuffleitungen jeder Zylinderseite zu einer gemeinsamen Leitung zusammengefaßt sein; in diesem Fall ist dann die Anordnung nur einer NOx-Falle ausreichend.

Durch diese Anordnung wird erreicht, daß sich durch die Anordnung der Drei-Wege-Katalysatoren nach den Auspuffkrümmern diese beim Startbetrieb rasch aufheizen. Die Aufheizung der Abgase durch die exotherme Reaktion der Katalysatoren erreicht die jeweils eingeschalteten NOx-Fallen jedoch erst nach einer bestimmten Abkühlung der Auspuffgase durch die verlängerte Führung der Abgasleitungen.

In Ausgestaltung der Erfindung kann vor den Drei-Wege-Katalysatoren für jede Zylinderreihe ein Entkoppelungselement vorgesehen sein.

Ausführungsbeispiele der Erfindung sind in den Figuren dargestellt.

Es zeigen:
- Fig. 1: eine perspektivische Darstellung der wesentlichen Elemente der Erfindung, eine Ausführungsform zeigend;
- Fig. 2: eine Draufsicht von unten auf die erfindungsgemäße Anordnung gemäß Fig. 1;
- Fig. 3: eine Draufsicht von unten auf eine andere Ausführungsform der Erfindung.

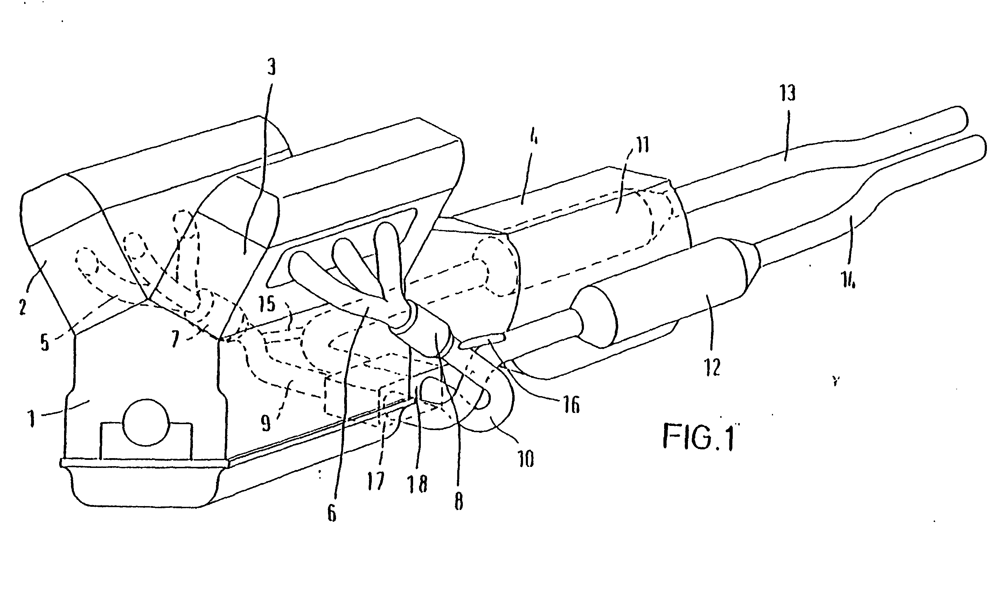

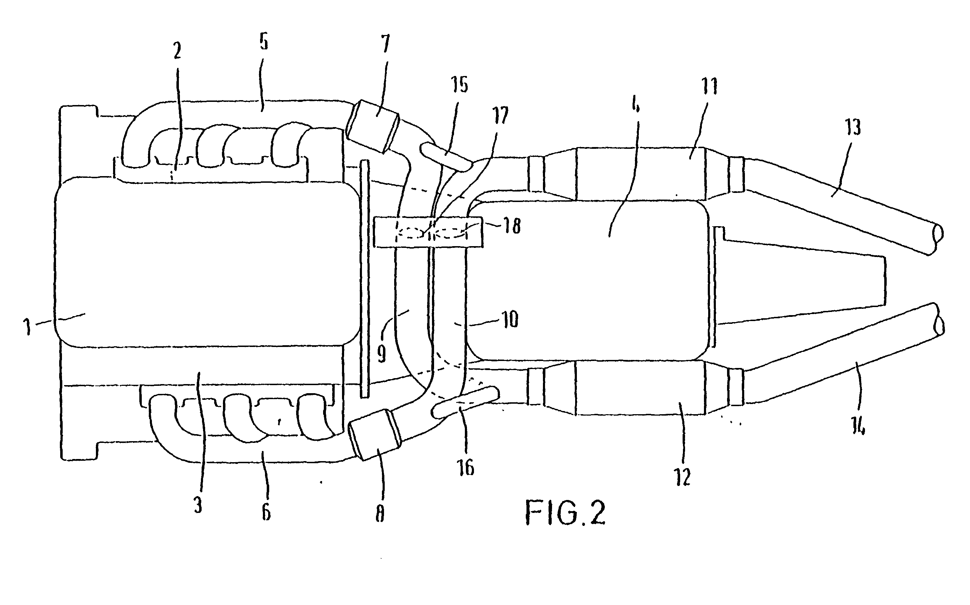

Bei einem insbesondere in den Figuren 1 und 2 dargestellten Ausführungsbeispiel der Erfindung besitzt eine Verbrennungskraftmaschine 1 mit V-Anordnung der Zylinder, im Beispiel sechs Zylinder, zwei mit 2 und 3 bezeichnete Zylinderreihen. In Fahrtrichtung gesehen hinter der Verbrennungskraftmaschine ist ein Getriebe 4 angeordnet. Die Abgase der Verbrennungskraftmaschine 1 gelangen über Abgaskrümmer 5 und 6 zu Abgasleitungen 9 und 10.

Die Abgasleitungen 9 und 10 für je eine Zylinderreihe verlaufen beim Ausführungsbeispiel in Fahrtrichtung gesehen hinter der Verbrennungskraftmaschine zur anderen Seite des Kraftfahrzeuges und gelangen dann zu einer auf dieser Seite angeordneten NOx-Falle 11 bzw 12. Diese Einrichtung kann, sofern es gewünscht wird. auch eine Einrichtung zur Ansammlung von Schwefelverbindungen aus dem verwendeten Kraftstoff enthalten. Der Verlauf der Abgasleitungen 9 und 10 ist dabei vorzugsweise unterhalb des Bereiches Verbrennungskraftmaschine/Getriebe 4 vorgenommen. Bei der Ausführungsform gemäß Fig. 1 und 2 befindet sich in Fahrtrichtung gesehen hinter der Verbrennungskraftmaschine 1 eine Steuerventilanordnung 17 bzw 18, mit der temperaturgesteuert die Leitungen 9 und 10 abgesperrt werden können, um ein rasches Aufheizen der NOx-Fallen 11 und 12 beim Kaltstart zu erreichen. Dieses geschieht durch Bypass-Leitungen 15 und 16, die einen Bereich nahe den Abgaskrümmern 5, 6 jeder Zylinderreihe 2, 3 mit der Abgasleitung verbindet, die der anderen Zylinderreihe zugeordnet ist. Dadurch erfolgt eine Führung der Abgase durch die Abgasleitung gewissermaßen über Kreuz zur anderen Seite des Kraftfahrzeuges, während die Bypass-Leitungen einen direkten und kurzen Weg zwischen den entsprechenden Abgaskrümmern und der Abgasleitung, die eigentlich der anderen Zylinderreihe zugeordnet ist, herstellen. und zwar auf der gleichen Seite des Kraftfahrzeuges.

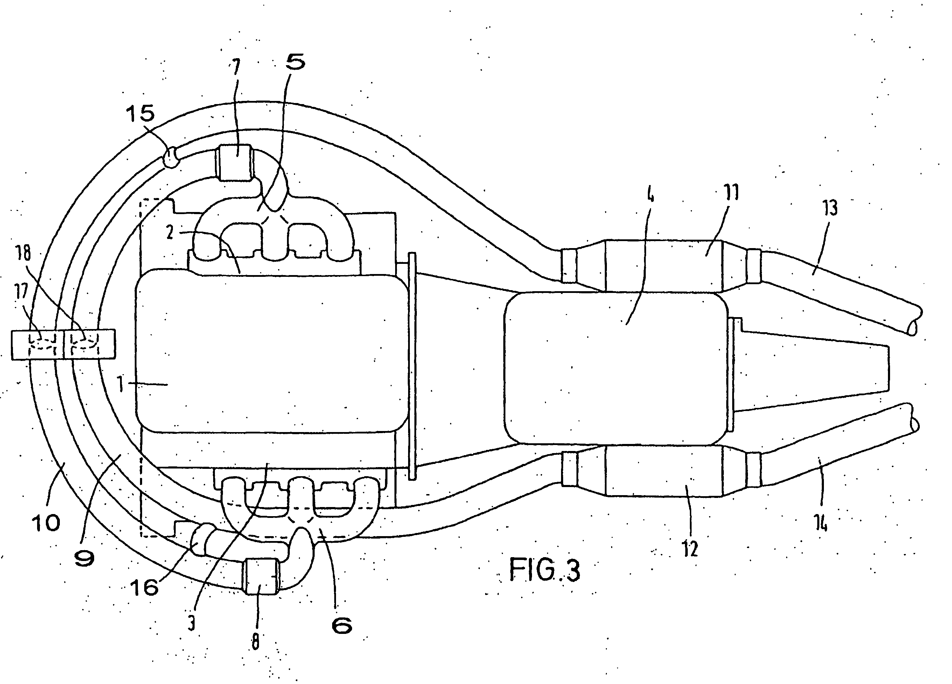

Bei einem anderen Ausführungsbeispiel der Erfindung, wie in Fig. 3 dargestellt, verlaufen die Abgasleitungen 9 und 10 von den Abgaskrümmern 5 und 6 zunächst in Fahrtrichtung gesehen nach vorne und werden um die Verbrennungskraftmaschine herumgeführt zur anderen Seite des Kraftfahrzeuges; dort erfolgt dann die Zuleitung zu dem NOx-Falle (11, 12) auf einer Seite des Kraftfahrzeuges. Auch hier sind entsprechende Bypass-Leitungen vorgesehen, die mit 15 und 16 bezeichnet sind. Bei diesem Ausführungsbeispiel ist die Steuerventilanordnung 17 bzw 18 in Fahrtrichtung gesehen vor der Verbrennungskraftmaschine angeordnet.

Alle Bypass-Leitungen beider Ausführungsbeispiele sind in der Länge wesentlich kürzer als die Abgasleitungen in denen sich die Steuerventilanordnungen 17, 18 befinden außerdem sind alle Bypass-Leitungen 15, 16 mit einem Querschnitt ausgestattet, der deutlich kleiner ist als der Querschnitt der Abgasleitungen 9, 10.

Unmittelbar nach den Abgaskrümmem 5 bzw 6 auf jeder Seite der Verbrennungskraftmaschine sind Drei-Wege-Katalysatoren 7 bzw 8 angeordnet. Die Anordnung der Katalysatoren nahe den Auspuffkrümmern stellt sicher, daß diese rasch, insbesondere auch beim Kaltstart, eine günstige Betriebstemperatur erreichen. Diese Anordnung stellt aber auch sicher, daß die durch die exotherme Reaktion der Drei-Wege-Katalysatoren 7 und 8 erfolgte Aufwärmung der Abgase nicht unmittelbar zu den NOx-Fallen 11 und 12 gelangt, sondern daß, im Dauerbetrieb des Fahrzeuges, eine Abkühlung durch die verlängerten Abgasleitungen erfolgt. Trotzdem ist sichergestellt, daß bei Kaltstart auch für die NOx-Fallen 11 und 12 rasch eine günstige Betriebstemperatur erreicht wird, und zwar durch die Wirkung der Bypass-Leitungen 15 und 16.

## Patentansprüche

1. Kraftfahrzeug mit einer im Frontbereich angeordneten Verbrennungskraftmaschine (1), deren Zylinder in V-Anordnung mit zwei Zylinderreihen (2, 3) angeordnet sind und die Mittelachse in Fahrtrichtung weist, bei der die Abgase jeder Zylinderreihe (2, 3) über je eine Abgasleitung (9,10) weitergeleitet werden und wobei die Abgasleitungen (9, 10) durch Steuerventilanordnungen (17, 18) absperrbar sind, wobei die Abgase jeder Zylinderseite einem jeweiligen Drei-Wege-Katalysator (7, 8) zugeleitet werden und zwischen den Abgasleitungen (9, 10) jeweils eine Bypass-Leitung (15, 16) mit wesentlich geringerem Querschnitt vorgesehen ist, und die Bypass-Leitungen (15, 16) einen Bereich der Abgasleitungen (9, 10) einer Zylinderreihe (2, 3) stromaufwärts der Steuerventilanordnungen (17, 18) mit einem Bereich der Abgasleitung (9, 10) für die andere Zylinderreihe (2, 3) stromabwärts der Steuerventilanordnung (17, 18) verbinden, wobei di Abgaskrümmer (5, 6) jeder Zylinderreihe (2, 3) unmittelbar in den jeweiligen Drei-Wege-Katalysator (7, 8) einmünden und entweder am Ende der Abgasleitungen (9, 10) vor den Auspuffleitungen (13, 14) eine NOx-Falle (11 bzw. 12) angeordnet ist oder die Abgasleitungen (9, 10) für jede Zylinderseite zu einer Leitung mit einer NOx-Falte zusammengefaßt sind.

2. Kraftfahrzeug nach Anspruch 1, **dadurch gekennzeichnet, daß** vor den Drei-Wege-Katalysatoren (7, 8) für jede Zylinderreihe ein Entkopplungselement vorgesehen ist.

## Claims

1. Motor vehicle having an internal combustion engine (1) arranged in the front region, the cylinders of which engine are in a V arrangement with two cylinder banks (2, 3) and the centre axis facing in the direction of travel, wherein the exhaust gases from each cylinder bank (2, 3) are passed on via in each case one exhaust pipe (9, 10), it being possible for the exhaust pipes (9, 10) to be blocked off by control valve arrangements (17, 18), the exhaust gases from each cylinder side being fed to a respective three-way catalytic converter (7, 8), and a bypass line (15, 16) of in each case a smaller cross section being provided between the respective exhaust pipes (9, 10), and the bypass lines (15, 16) connecting a region of the exhaust pipes (9, 10) of one cylinder bank (2, 3) upstream of the control valve arrangements (17, 18) to a region of the exhaust pipe (9, 10) for the other cylinder bank (2, 3) downstream of the control valve arrangement (17, 18), the exhaust manifolds (5, 6) of each cylinder bank (2, 3) opening out directly into the respective three-way catalytic converter (7, 8), and either an NOx trap (11 or 12) being arranged at the end of the exhaust pipes (9, 10) upstream of the exhaust tailpipes (13, 14) or the exhaust pipes (9, 10) for each cylinder side being combined to form a single pipe with an NOx trap.

2. Motor vehicle according to Claim 1, **characterized in that** a decoupling element is provided upstream of the three-way catalytic converters (7, 8) for each cylinder bank.

## Revendications

1. Véhicule automobile, avec un moteur à combustion interne (1) disposé dans la zone frontale, dont les cylindres sont disposés en V avec deux rangées de cylindres (2,3) et dont l'axe médian est dirigé dans le sens de déplacement, dans lequel les gaz d'échappement de chaque rangée de cylindres (2, 3) sont transmis par respectivement une conduite de gaz d'échappement (9, 10) et les conduites de gaz d'échappement (9, 10) pouvant être fermées par des agencements de soupapes de commande (17, 18), les gaz d'échappement de chaque rangée de cylindres étant amenés à un pot catalytique respectif à trois voies (7, 8) et une conduite de dérivation (15, 16) respective avec une section transversale nettement inférieure étant prévue entre les conduites de gaz d'échappement (9, 10) et les conduites de dérivation (15, 16) reliant une zone des conduites de gaz d'échappement (9, 10) d'une rangée de cylindres (2, 3) en amont de l'agencement de soupapes de commande (17, 18) avec une zone de la conduite de gaz d'échappement (9, 10) pour l'autre rangée de cylindres (2, 3) en aval de l'agencement de soupapes de commande (17, 18), les collecteurs de gaz d'échappement (5, 6) de chaque rangée de cylindres (2, 3) débouchant directement dans le pot catalytique respectif à trois voies (7, 8) et soit un piège à NOx (11, resp. 12) étant disposé sur l'extrémité des conduites de gaz d'échappement (9, 10), avant les conduites d'échappement (13, 14) ou les conduites de gaz d'échappement (9, 10) pour chaque côté de cylindres étant regroupées en une conduite avec un piège à NOx.

2. Véhicule automobile selon la revendication 1, **caractérisé en ce qu'**un élément de découplage est prévu pour chaque rangée de cylindres, à l'avant des pots catalytiques à trois voies (7, 8).
